# EUROPEAN PATENT APPLICATION

(11) **EP 1 324 579 A2**
(43) Date of publication of application: **02.07.2003**
(21) Application number: 02102804.8
(22) Date of filing: 18.12.2002
(51) Int. Cl.: H04M 3/42

(54) **Call management method responsive to online presence in a network**

(30) Priority: 18.12.2001 US 26330
(71) Applicant: AT&T Corp., New York, NY 10013-2412 (US)
(72) Inventor: Bosik, Barry S., Marlboro, NJ 07746 (US); Garg, Amit, Freehold, NJ 07728 (US); Patil, Rajeev B., Holmdel, NJ 07733 (US); Tuttle, Jeffrey L., Hazlet, NJ 07730 (US)
(74) Representative: Suckling, Andrew Michael

(57) **Abstract**

A call management method that provides for handling, according to subscriber-designated preferences, an incoming voice call to the subscriber while logged on a network. When the subscriber occupies a line, the method includes activating an Internet presence server that determines online status by checking IP activity at the subscriber's IP address. If the subscriber is online and has indicated a preference to accept calls, a pop-up screen is activated at the subscriber's terminal to display menu options to handle the call, such as answering via VoIP, text-to-speech synthesis, forwarding the call to a specific number, or sending the call to voicemail. A voicemail message may also be sent to an e-mail account as an audio file or as a pager alert with short message text. Certain management features may be disabled dynamically in response to the on-line status of the subscriber.

## Description

### BACKGROUND OF THE INVENTION

This invention relates to call management, but more specifically to a method that enable a network subscriber, whether on-line or offline, to respond to incoming calls that otherwise would receive busy or no-answer treatment.

A call management system enables a subscriber to manage incoming calls by providing services including call forwarding, caller ID, call waiting, voicemail, and, if the subscriber is engaged in an active Internet session, Internet call waiting.

While browsing online, an Internet subscriber limited to a single telephone line for both network and telephone usage may frequently miss calls because the subscriber can neither make nor receive voice calls when engaged in a network session. Unless the subscriber uses a separate communication link or a terminal equipped with VoIP telephony, for example, calls cannot be initiated or received until the subscriber logs off. Subscribers are often constrained to utilizing a single telephone line due to unacceptable costs of multiple lines or unavailability of an alternative line.

Many prior call management systems tailored to Internet use provide only a partial solution. Such systems may play a message informing a calling party that the subscriber is engaged in a network session or is otherwise indisposed, or may record the incoming caller's message and/or provide other voicemail or conventional call management services. However, these systems do not permit the subscriber to return calls until the online session has been terminated. If the subscriber cannot respond immediately, a calling party requiring urgent communication may often find the subscriber's belated return call useless.

Furthermore, a subscriber who has logged off may encounter difficulty in logging back on, may have to use a different IP address after logging back on, or may miss important online communication altogether. The maximum level of communication control available through use of the Internet is diminished directly by the use of the telephone, and vice versa.

A further limitation of prior Internet call waiting systems is inflexibility. A subscriber cannot change preset distribution of call management services during an IP network session. For example, although a subscriber may desire to avoid notice of calls during a particular session, prior systems interrupt the session if preset to do so. By design, the fixed nature of prior systems' programming may fail to meet a subscriber's changing needs.

Although some call management services provide increased control over calls, they also increase billing charges. Call management services such as call waiting and call forwarding have generally been sold to subscribers as separate components and connected directly to a public switched telephone network (PSTN). When a subscriber initially fails to handle an incoming call, the PSTN forwards the call to a call management service (e.g., Internet call waiting) and charges the subscriber accordingly. When an additional component is used to handle the same call (e.g., Internet call waiting routes the incoming call to voicemail), data transmitted from one component to the other must pass through the PSTN again. Because a PSTN provider generally bills the subscriber each time a call is switched, the subscriber may incur undue charges.

### SUMMARY OF THE INVENTION

In accordance with an embodiment of the invention, a method of managing an incoming call of a subscriber logged on a network comprises storing subscriber preferences in a memory for subsequent use in making call management decisions; ascertaining the online status of the subscriber; indicating an incoming call to the subscriber during an online session; and, according to subscriber preferences stored in the memory, forwarding the incoming call to voicemail, forwarding the incoming call to a forwarding number, or activating an options selection menu at a display for subscriber action.

Other aspects of the invention will become apparent upon review of the following description taken in conjunction with the accompanying drawings. The invention, though, is pointed out with particularity by the appended claims.

### BRIEF DESCRIPTION OF THE DRAWING FIGURES

FIG. 1 is an overview of a communication system in which an embodiment of the present invention may be carried out.
FIG. 2 is a flowchart describing the operation of a communication system, such as the system shown in FIG. 1.
FIG. 3 illustrates in more detail a portion of the flowchart of FIG. 2, which depicts a scenario where the subscriber's line rings without answer.
FIG. 4 illustrates in more detail a portion of the steps of FIG. 2, which depict a scenario where the subscriber's line is busy due to being logged onto a network.
FIG. 5 illustrates in more detail a portion of the steps of FIG. 2, which depict a scenario where the subscriber's single line is busy although the subscriber is not logged onto a network.
FIG. 6 illustrates in more detail a portion of the steps of FIG. 2, which sets forth a scenario where a subscriber answers a call in a conventional manner.

### DESCRIPTION OF ILLUSTRATIVE EMBODIMENTS

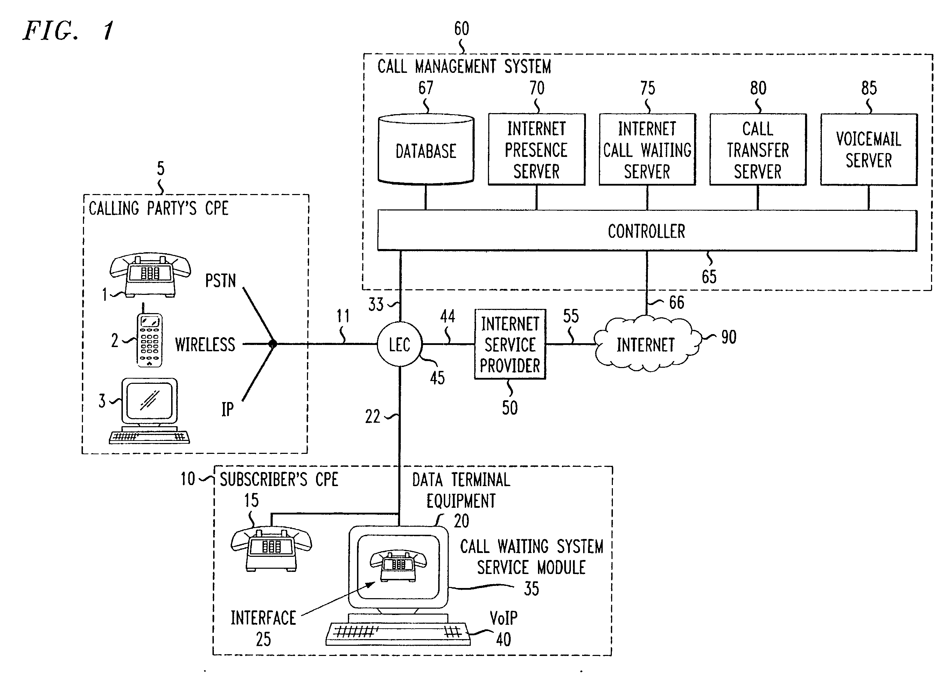

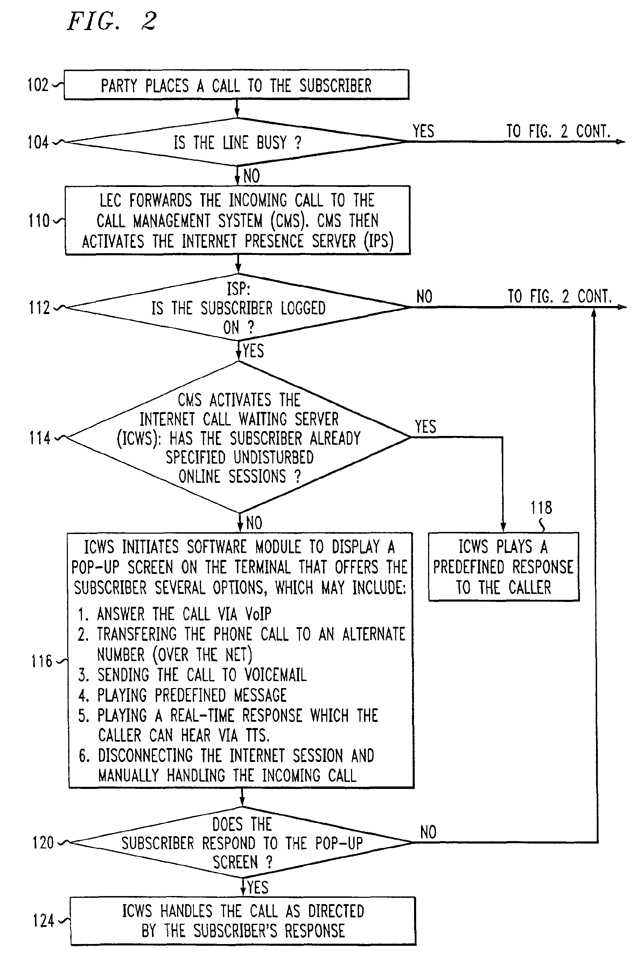

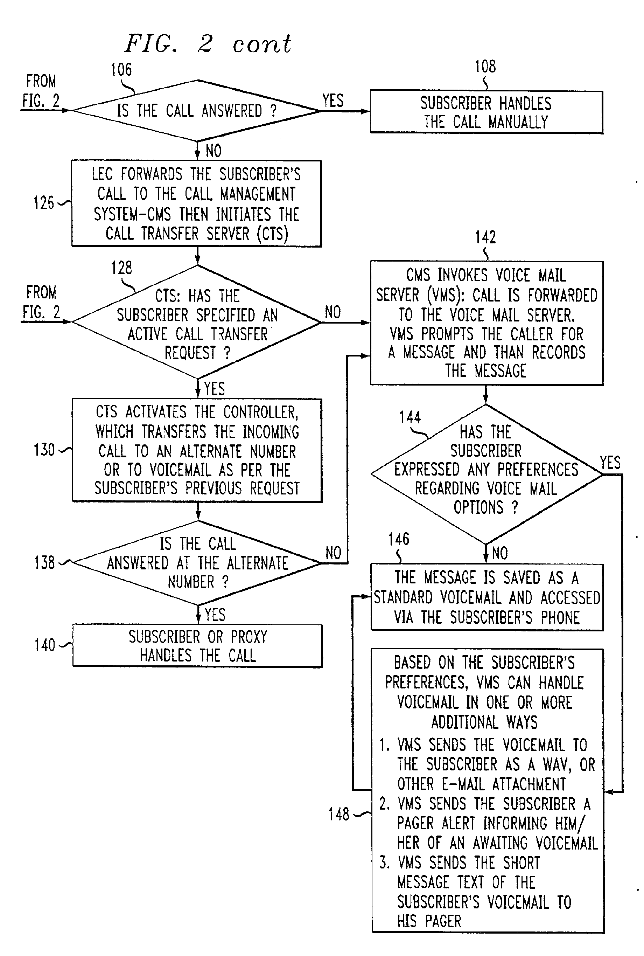

FIG. 1 shows a communication system in which an embodiment of the invention may be practiced. The system includes a local exchange carrier (LEC) 45 that provides a local communication link, a terminal or calling party's communication premise equipment (CPCPE) 5 that may initiate or receive a call, a terminal or subscriber communication premise equipment (SCPE) 10 that may also initiate or receive a call, an Internet 90 that conveys IP packets via service provider 50, and call management system 60 that manages incoming calls. CPCPE 5 or SCPE 10 may also be a private branch exchange. In describing the operation of the system shown in FIG. 1, references will be made to FIG. 2.

LEC 45 may comprise a conventional public switched telephone network (PSTN) that enables transfer of messages between parties such as CPCPE 5 and SCPE 10. LEC 45 conveys information between various devices and networks.

CPCPE 5 is a terminal from which a calling party may transmit a message via link 11 and LEC 45 to a subscriber at SCPE 10 via a wireline, wireless, VoIP telephony, or other link. CPCPE 5 may comprise a telephone 1, wireless device 2, and/or computer terminal 3.

SCPE 10 is also a terminal at which a subscriber receives messages from a calling party at CPCPE 5 via LEC 45 and link 22. SCPE 10 may include a telephone 15 and/or data terminal equipment (DTE) 20. The subscriber's DTE 20 may include a software module 35 to enable the subscriber to select options for handling incoming calls, speakers, sound card, microphone, or any other structures 40 capable of facilitating voice-over-IP (VoIP) telephony. The module 35 generally comprises a software routine executed by DTE 20 that activates the pop-up user interface on the monitor.

Internet 90 routes IP packets to various addressed nodes in the network. In alternative embodiments of the invention, an Ethernet, LAN, WAN, or another Internet, or different IP network may be used instead of Internet 90. Internet 90 is interconnected with LEC 45 via, for example, an Internet service provider 50 and communication links 44 and 55. Internet service provider 50 may comprise a wireless network, hybrid fiber coaxial network, PSTN, or other network that enables a subscriber to access Internet 90 via dial-up, DSL, cable modem bank, or other means.

Call management system 60 includes a controller 65, a database 67, an Internet presence server 70, an Internet call waiting server 75, a call transfer server 80, and a voicemail server 85 (the latter four being hereinafter be referred to as "server group 86"). Controller 65 acts as an interface with controller 65, database 67, server group 86, LEC 45, and Internet 90. Database 67 in the call management system 60 stores subscriber preferences that controller 65 and the server group 86 retrieve and use for call management decisions. These preferences may include, for example, active call transfer requests reflecting the subscriber's call handling preferences regarding call forwarding and voicemail services.

Using predetermined identity information, e.g., a terminal IP address and/or device ID codes, or transmitted information generated by subscriber terminal 10, Internet presence server 70 accesses Internet 90 to ascertain the online presence of the subscriber 10 on Internet 90.

Internet call waiting server 75 generates a message informing subscriber 10 about incoming calls when subscriber 10 is engaged in an active network session, provides the subscriber 10 with several options to handle an incoming call, and activates controller 65 to execute the subscriber's command input.

Call transfer server 80 effects forwarding of an incoming call to either voicemail server 85 or to one or more alternate call forwarding numbers retrieved from database 67 according to prerecorded subscriber preferences. If the subscriber has not entered any alternate forwarding numbers in database 67, or if an incoming call is not answered at an alternate number to which the call is forwarded, call transfer server 80 effects sending the call to voicemail server 85.

Voicemail server 85 receives calls forwarded from LEC 45 and from call transfer server 80, and prompts the calling party to leave a message. Once the calling party records a message, voicemail server 85 stores and handles the message according to subscriber preferences stored in database 67.

References will now be made to an illustrative embodiment of a method of the invention as depicted in FIG. 2, which shows a flowchart illustrating steps implemented in the embodiment shown in FIG. 1. Steps within the method may vary depending upon the state of the subscriber's line.

At step 102 of Fig. 2, LEC 45 receives signals indicating that the calling party at CPCPE 5 is placing a call to the subscriber at SCPE 10. At step 104, LEC 45 signals SCPE 10 regarding the status of communication line 22, and then SCPE 10 transmits a response indicating whether communication line 22 is busy.

If subscriber's communication line 22 is busy, LEC 45 forwards the incoming call and a "busy" message to controller 65 via communication line 33 (step 110). Because a busy signal indicates the subscriber may be engaged in an active network session, controller 65 activates the Internet presence server 70 to check the on-line status of subscriber 10.

Upon detecting that the subscriber's network status is active (step 112), Internet presence server 70 returns a positive response to controller 65, which transmits signals activating Internet call waiting server 75 at step 114.

If data retrieved from database 67 by controller 65, for example, indicates that the subscriber prefers to remain undisturbed while online (step 114), Internet call waiting server 75 effects playing of a prerecorded message informing the calling party that the subscriber is logged on to Internet 90 or otherwise indisposed (step 118). If, however, the subscriber prefers to receive notice of incoming calls while online (as indicated by subscriber preferences stored in database 67), Internet call waiting server 75 effects, at step 116, activation of an option selection module 35 which provides, for example, a pop-up menu on the subscriber's terminal 10 that enables the selection of options to handle the incoming call. Options'selection module 35 may alert the online subscriber of an incoming call by displaying "pop-up" interface 25 on a display monitor of the subscriber's DTE 20. Interface 25 preferably provides the subscriber with a suite of call management options for handling the call. Once the subscriber selects an option, Internet call waiting server 75 activates controller 65, which, in turn, either executes the subscriber's command or initiates another server to do so (step 124).

Referring back to step 104, if LEC 45 notifies controller 65 that communication line 22 is not busy and that the incoming call is not answered (step 106), controller 65 forwards the incoming call to call transfer server 80 (step 126). Similarly, Internet presence server 70 effects forwarding of the incoming call to call transfer server 80 when the subscriber is not logged on Internet 90 (referring to step 112) or does not respond to interface 25 (referring to step 120).

At step 128, call transfer server 80 accesses the subscriber's active call transfer requests. If the subscriber prefers call forwarding to voicemail, controller 65 accesses the subscriber's list of forwarding telephone numbers from database 67 (step 130) and forwards the incoming call to one or more of the numbers based upon the subscriber's preferences regarding other parameters listed in database 67 (e.g. calling party's identity, the time of day, the day of the week, etc.).

If the call is not answered at a forwarding number (step 138), or if the subscriber has not entered any active call transfer requests (referring to step 128), controller 65 forwards the incoming call to voicemail server 85.

Upon receiving an incoming call, voicemail server 85 prompts the calling party to leave a recorded message (step 142). After recording the calling party's message (step 144), voicemail server 85 accesses database 67 (using controller 65) to determine whether the subscriber prefers to save and store a voicemail message (step 146), to send the message as an attached audio file to the subscriber's e-mail account, or to alert the subscriber's pager regarding the saved voicemail message (step 148).

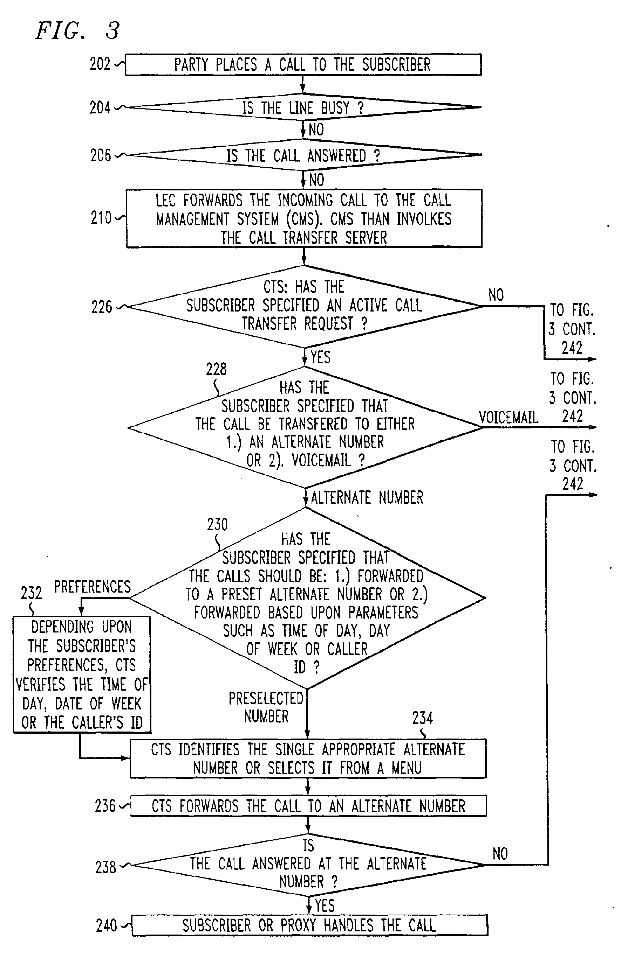

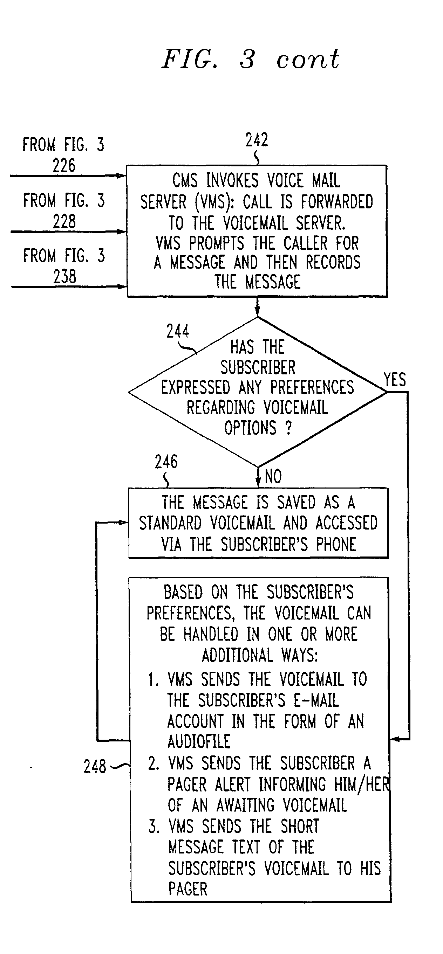

Fig. 3 illustrates a flowchart showing events that occur when an incoming call directed to SCPE 10 rings but is not answered (possibly because the subscriber is absent or otherwise indisposed). At step 202, the calling party places a call from CPCPE 5 to the subscriber's terminal at SCPE 10. LEC 45 determines that the subscriber's communication line 22 is not busy (step 204), and is instead ringing without answer (step 206). LEC 45 forwards the call to controller 65 at step 210, and also transmits a message indicating the status of communication line 22. Because communication line 22 is not busy, controller 65 recognizes that the subscriber is not logged on the Internet and thus that controller 65 need not invoke the Internet presence server 70 to determine whether the subscriber is currently logged on Internet 90. Controller 65 instead activates call transfer server 80, which retrieves the subscriber's active call transfer requests from database 67 (step 226).

If the subscriber has stored in database 67 a preference for call forwarding over voicemail (step 228), call transfer server 80 determines (1) whether the call should be forwarded to one or more alternate telephone numbers preset by the subscriber and (2) whether to forward calls based upon the subscriber's preferences regarding time of day, day of week, or the calling party's identity (step 230). After call transfer server 80 examines the active call transfer requests and other subscriber preferences stored in database 67 and selects a forwarding telephone number (steps 232 and 234), controller 65 forwards the incoming call to that telephone number at step 236.

However, if the call is not answered at the alternate number (step 238), or if the subscriber previously specified a preference for voicemail over call forwarding (referring to step 228), call transfer server 80 directs controller 65 to forward the call directly to voicemail server 85. Alternatively, if the subscriber never recorded an active call transfer request in database 67 (step 226), the incoming call is directed by default to voicemail server 85.

Voicemail server 85 prompts the calling party to leave a message, records the message (step 242), and retrieves any subscriber preferences regarding available voicemail options from database 67 (step 244). For example, the subscriber may have elected to have any recorded message simply saved and accessed via the telephone 15 or DTE 20 (step 246) or sent to an e-mail address as an audio file (step 248). The subscriber also may have arranged to have voicemail server 85 send an informational alert to a pager regarding the voicemail message, and in some embodiments, a full text version of the message (step 248).

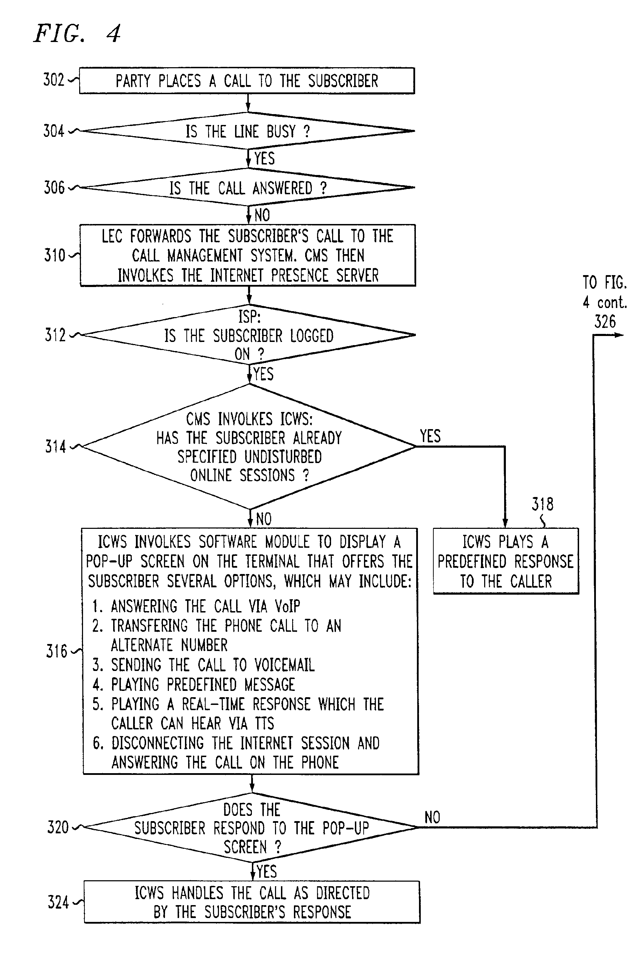

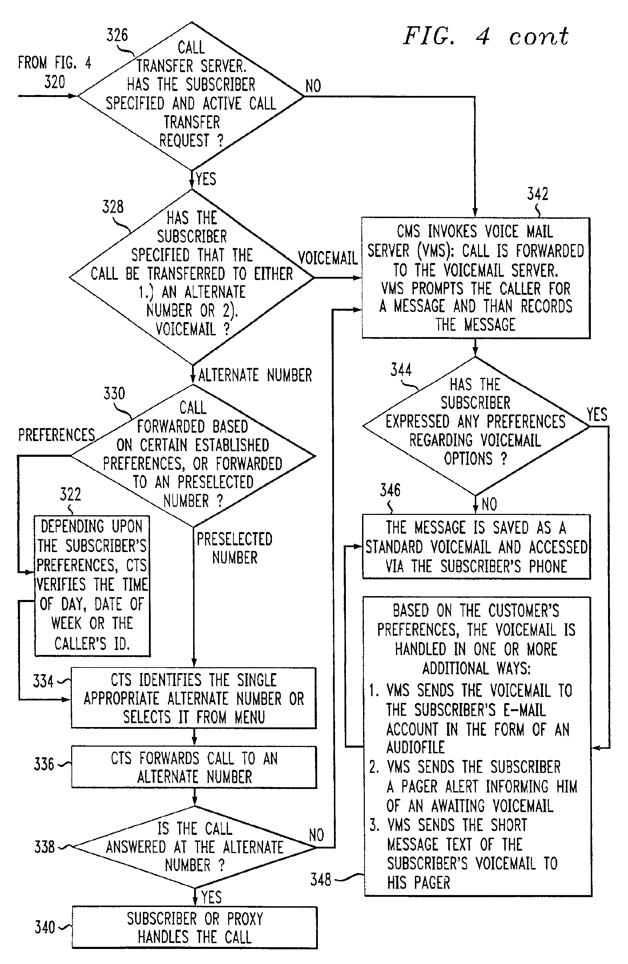

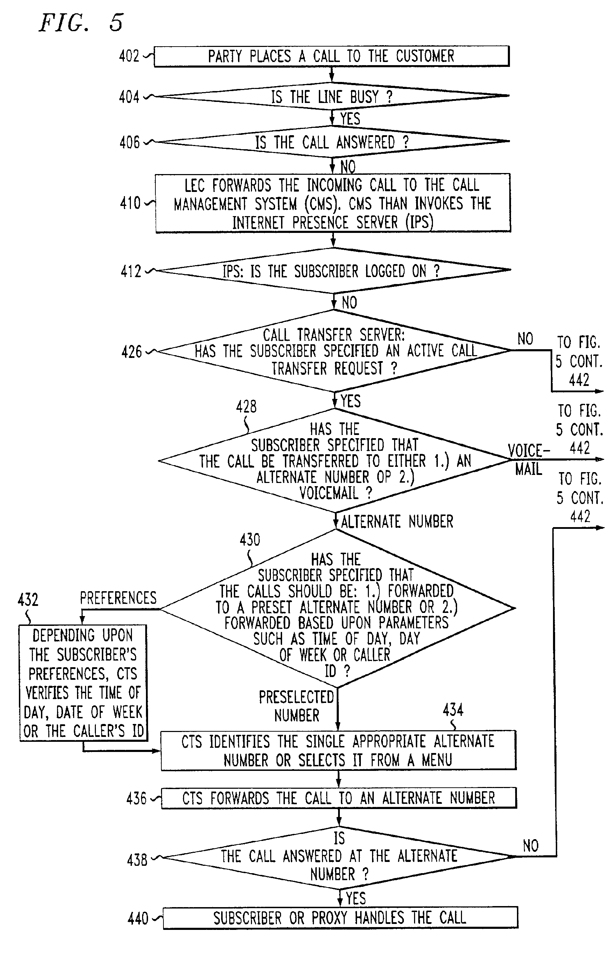

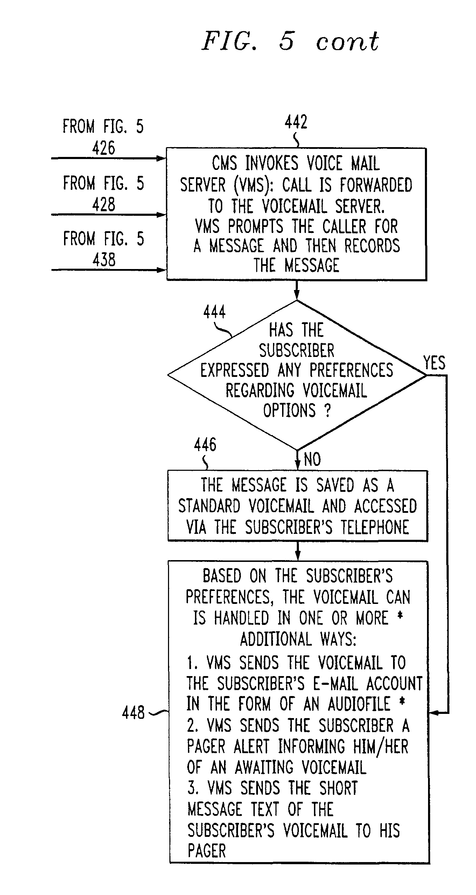

FIG. 4 illustrates the steps of an exemplary method that occur when the subscriber is engaged in an active IP network session on Internet 90. The calling party places a call to the subscriber at step 302. LEG 45 determines that communication line 22 is busy (step 304) and that the incoming call remains unanswered (step 306). LEC 45 forwards the call to controller 65, which, in turn, notifies Internet presence server 70 (step 310). Through controller 65, Internet presence server 70 accesses Internet 90 in order to determine whether the subscriber is actively engaged in a network session (step 312). If the subscriber is logged on Internet 90, Internet presence server sends a message that notifies controller 65 that the subscriber is engaged in an online session (steps of the method that occur when the subscriber is not engaged in an online session are illustrated in FIG. 5).

At step 314, controller 65 activates Internet call waiting server 75. If the subscriber's stored preferences indicate that online sessions should not be disturbed by incoming telephone calls, Internet call waiting server 75 initiates playing of a preprogrammed response to the calling party (step 318). Otherwise, Internet call waiting server 75 instructs the options selection module 35 at step 316 to activate "pop-up" interface 25, which interface may include a graphic notification on the display device of DTE 20 or an audible message on the sound system of DTE 20.

Interface 25 (Fig. 1) is an interactive menu that presents the subscriber with several options (step 316) including (1) answering the call via VoIP, (2) having call transfer server 80 forward the incoming call to an alternate telephone number, (3) having voicemail server 85 handle the call, (4) playing a predefined message, (5) composing and sending a response received by the caller in real-time, or (6) disconnecting the Internet session and manually handling the incoming call at telephone 15. Certain of these services, such as options (B) through (e), may also be available when the subscriber is not online. For example, system operability may include dynamically enabling at least one of indicating on-line status, forwarding calls to voicemail or a forwarding number, or activating the options selection menu in accordance with the on-line status of the subscriber.

If the subscriber selects option (1), for example, call management system 60 converts the call from analog to digital at the TCP/IP and forwards it to the subscriber's DTE 20 as a VoIP call.

If the subscriber selects option (2), controller 65 retrieves active call transfer requests from database 67 and activates call transfer server 80. Call transfer server 80 generates the appropriate alternate telephone number and prompts controller 65 to forward the incoming call to that telephone number at step 328. Forwarding the call from Internet call waiting server 75 to call transfer server 80 bypasses the PSTN, thus avoiding additional PSTN use.

If the subscriber selects option (3), controller 65 directs the incoming call from Internet call waiting server 75 to voicemail server 85. Because the forwarded call does not again transit the PSTN, the subscriber may utilize multiple services without incurring additional PSTN usage (step 316). Voicemail server 85 prompts a caller to leave a message, examines subscriber preferences stored in database 67, and executes the subscriber's commands accordingly.

In selecting option (4), the subscriber chooses to have a predefined message played that informs the calling party that the subscriber is logged onto Internet 90 or is otherwise unavailable to take the call.

If the subscriber selects option (5), he or she may type a message that will be converted into voice by conventional speech synthesis processes, and then heard by the caller at his computer if he is logged onto the Internet and his computer is equipped with features 40 required to facilitate VoIP telephony.

In selecting option (6), the subscriber chooses to discontinue his Internet session and manually handle the incoming call using telephone 15.

Fig. 5 shows yet another scenario. It is a flowchart illustrating events that occur when the subscriber's communication line 22 is busy and the subscriber is not logged onto Internet 90. After receiving a call placed from the calling party at CPCPE 5 to the subscriber at SCPE 10 (step 402), LEC 45 checks the status of communication line 22 (steps 404 and 406) before forwarding the incoming call to controller 65. LEC 45 then notifies the controller 65 that communication line 22 is busy and also that the subscriber has not yet answered the incoming call (step 410). Controller 65 activates Internet presence server 70 (step 410), which transmits a message to locate the subscriber's IP address and related activity in Internet 90 (step 412). Because the subscriber is not logged on to Internet 90, the Internet presence server 70 receives no response or an otherwise negative response. At this point, controller 65 activates call transfer server 80 (step 426).

Call transfer server 80 examines the subscriber's active call transfer requests (stored in database 67) and determines whether to forward the call to an alternate telephone number or to voicemail server 85 (step 428). If the subscriber has listed one or more alternate numbers or other forwarding parameters (caller's identity, time of day, day of week, etc.) in database 67 (step 430 and 432), the call management system effects selection of an appropriate forwarding number (step 434) and forwards the incoming call to that number (step 436).

If the call is not answered at the alternate number (step 438), if the subscriber has specified a preference in database 67 for voicemail over call forwarding (referring to step 428), or if the subscriber has simply failed to make any active call transfer requests (referring to step 426), controller 65 triggers voicemail server 85 to prompt the calling party to leave a voicemail message (step 442).

If the caller leaves a message, voicemail server 85 records it and then examines the subscriber's voicemail preferences in database 67 (step 444). Depending on the subscriber's preferences, the voicemail message can be accessed by the subscriber via telephone 15 (step 446) or as an audio file sent to the subscriber's voicemail (step 448). The subscriber may also prefer to receive a pager alert or text message regarding the incoming call (step 448).

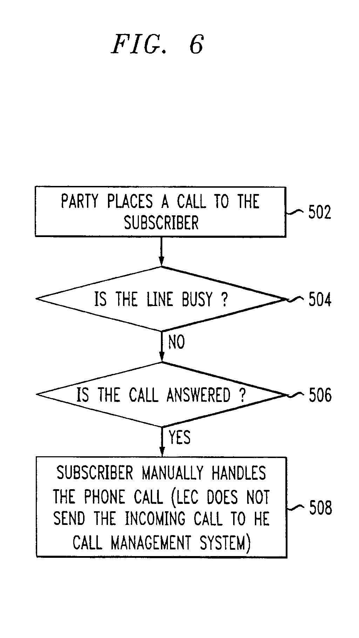

Fig. 6 is a flowchart illustrating a scenario where someone at SCPE 10 manually handles the incoming call at telephone 15. The calling party places a call from CPCPE 5 to the subscriber at SCPE 10 (step 502). LEC 45 determines that the line is not busy (step 504) because someone has answered or otherwise manually handled this call (step 506). LEC 45 will not forward a call to controller 65 (step 508).

The apparatuses and methods described above are intended to illustrate and not limit the invention defined by the appended claims. The functional block diagrams and flow charts presented herein do not imply that the invention must be structured or characterized as such. In actual practice, functions implemented by software routines may have varied architectures and structures that may or may not resemble the illustrations contained herein. In some cases, the methods described herein need not be carried out in the order shown or described to achieve the results of the invention. In addition, the inventors have sought to use conventional terminology to describe their invention, it being recognized in the art that such functions, steps, devices, components, and apparatuses may have other names or nomenclature. It is the intent to embrace within the scope of the invention all such variations, modifications, and adaptations of the invention based on the above teachings as may come to those skilled in the art, however characterized or labeled.

## Claims

1. A method of managing an incoming call of a subscriber comprising:
ascertaining an online network status of the subscriber;
indicating an incoming call to the subscriber during an online operation; and
according to subscriber preferences, performing one of the step of (a) forwarding the incoming call to voicemail, (b) forwarding the incoming call to a forwarding number, and (c) activating an options selection menu to provide the subscriber with options to handle the incoming call, said options including at least one of forwarding the call to a specific number, handling the call via a VoIP service, and sending the call to voicemail.

2. The method of claim 1, wherein the network comprises one of an IP network, an Ethernet, a LAN, and a WAN.

3. The method of claim 1 wherein at least one of the ascertaining, indication, and performing steps occurs at one of a local exchange carrier, at a private branch exchange, or at equipment situated on the subscriber's premises.

4. The method of claim 1, further including storing the subscriber preferences in a memory where said preferences include at least one of a call forwarding number, a voicemail directive, and an Internet call waiting directive.

5. The method of claim 1, further including the step of dynamically enabling at least one of said indicating, forwarding, and activating in accordance with an on-line status of the subscriber.

6. A method of handling an incoming call on a telephone line occupied by a data terminal of a subscriber during an on-line network session of the subscriber, the method comprising:
recording a subscriber preference that indicates how an incoming call is to be handled,
ascertaining an online status of the subscriber;
notifying the subscriber of an incoming call via the subscriber's data terminal;
and
according to the subscriber preference, performing one of the steps of (a) forwarding the incoming call to voicemail, (b) forwarding the incoming call to a forwarding number, and (c) activating an options selection menu to provide the subscriber with options to handle the incoming call, said options including at least one of forwarding the call to a specific number, handling the call a VoIP service, and sending the call to voicemail.

7. A method of handling an incoming call on a line occupied by a data terminal of a subscriber during an on-line session of a network, the method comprising:
recording in a memory a subscriber preference defining how an incoming call is to be handled,
accessing the network to determine an online status of the subscriber;
notifying the subscriber of an incoming call via a display monitor associated with the data terminal; and
according to the subscriber preference, performing one of the steps of (a) forwarding the incoming call to voicemail according to the subscriber preference, (b) forwarding the incoming call to a forwarding number stored in the subscriber preference, and (c) activating an options selection menu to provide the subscriber with options to handle the incoming call, said options including at least one of forwarding the call to a specific number, handling the call via a VoIP service, and sending the call to voicemail.
